# EUROPEAN PATENT APPLICATION

(11) **EP 4 632 532 A1**
(43) Date of publication of application: **15.10.2025**
(21) Application number: 25168988.1
(22) Date of filing: 08.04.2025
(51) Int. Cl.: G06F 1/26

(54) **CONNECTION DEVICE AND CONNECTION SYSTEM**

(30) Priority: 08.04.2024 TW 113113011
(71) Applicant: Elka International Ltd, 221424 New Taipei City (TW)
(72) Inventor: TING, Yuan-Hsi, 221424 New Taipei City (TW); Lin, Kai-Hsuan, 221424 New Taipei City (TW); Lo, Wei-Long, 221424 New Taipei City (TW); Pan, Yu-Shuo, 221424 New Taipei City (TW)
(74) Representative: DTS Patent- und Rechtsanwälte PartmbB

(57) **Abstract**

A connection device (100) comprises a first connection interface (110), a second connection interface (120), a third connection interface (130), a controller (140) and a power selection component (150). Wherein a first transmission/reception channel (TX/RX-1) of the first connection interface (110) is, directly or indirectly, coupled to a second transmission/reception channel (TX/RX-2) of the second connection interface (120). The controller (140) is at least configured to perform a PD charging protocol, wherein a first communication channel (CC1) of the first connection interface (110), a second communication channel (CC2) of the second connection interface (120), and a third communication channel (CC3) of the third connection interface (130) are coupled to the controller (140). Wherein the power selection component (150), in respond to a control signal (CS) provided by the controller (140), selectively couples a first power bus (VBUS1) of the first connection interface (110) to a second power bus (VBUS2) of the second connection interface (120) or a third power bus (VBUS3) of the third connection interface (130).

## Description

### TECHNICAL FIELD

The present invention relates to a connection device and a connection system; in particular to, a connection device and a connection system are configured to support PD charging protocol.

### BACKGROUND

With the development of electronic commerce, people often use display media for conference negotiations. However, as the number of electronic devices used increases, people become more concerned about the extension of cables or circuits, the quality of signals, the complexity of layout of cable, or other issues related to cable arrangements. For example, various extension cables, adapters, or connection devices are used to extend or convert the same/different connection interfaces, or active transmission cables are used to improve the signal quality for long-distance applications.

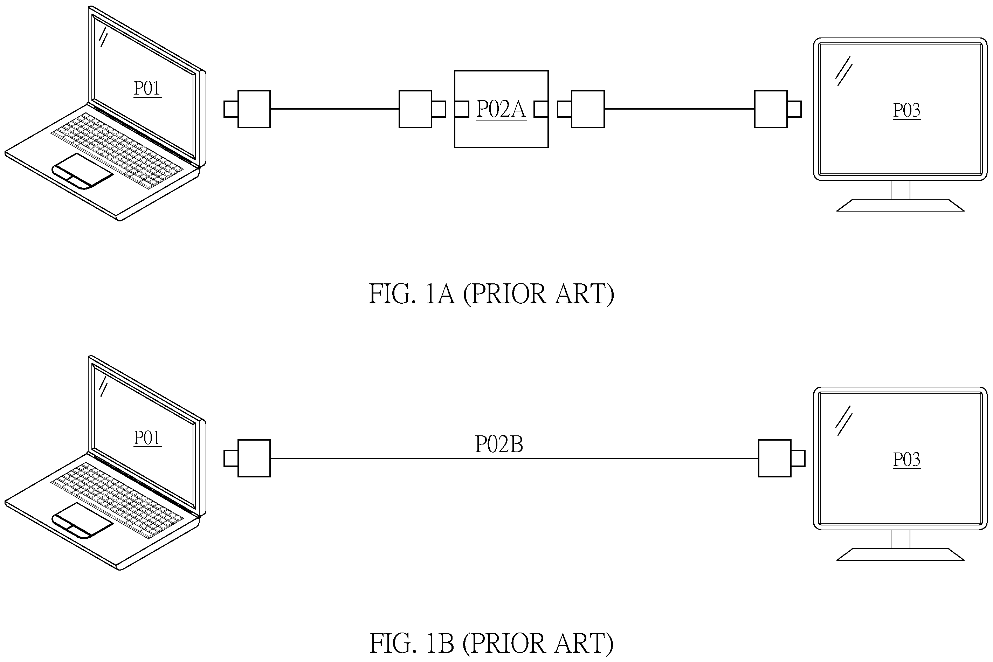

On the other hand, people tend to reduce the number of cables/wires used for connecting electronic devices, such as cables for power or signal transmission. For example, in a conventional arrangement, electronic devices transmit signals, especially image signals, through connection interface (such as Universal Serial Bus (USB) Type-C), and the electronic devices are charged by a connection interface suitable for PD charging protocol (such as through USB Type-C). Therefore, in the conventional arrangement, the number of cables for the electronic devices will be reduced. More specifically, referring to FIGs. 1A and 1B, an image signal output device (such as a laptop P01) provides image signals to a display device (such as a display device P03) through a connection device (such as an adapter P02A and/or a transmission line P02B). the display device P03 also establishes a PD charging protocol with the laptop P01 and supplies the necessary power to the laptop P01 through the power bus on the connection device P02. This can effectively reduce the number of cables required to connect the laptop P01.

However, when the display device P03 (i.e. the power providing device) cannot support the PD charging protocol or cannot provide sufficient power to the laptop P01 (i.e. the power demand device), the laptop P01 requires an additional power cable for suppling demand power. In conventional transmission lines, although there are transmission lines that provide an external power supply (such as US Patent No. 8964861B2 or TWM641795U), the external power supply is only used for chips inside the transmission line, rather than to provide the power demand device connected to the transmission line.

The power supply for an electronic device via PD charging protocol is limited by the power providing device. Accordingly, there are unmet needs for the cable/circuit connection of electronic device.

### SUMMARY

Therefore, the present invention provides a connection device and a connection system to effectively solve various problems encountered in the conventional technologies.

One of the objectives of the present invention is to provide a connection device and a connection system that can achieve goal of signal transmission and provide stable power to the power demand device without limited by the power providing device.

The present invention provides a connection device. The connection device includes a first connection interface, a second connection interface, a third connection interface, a controller and a power selection component. Wherein a first transmission/reception channel of the first connection interface is, directly or indirectly, coupled to a second transmission/reception channel of the second connection interface. Wherein a first communication channel of the first connection interface, a second communication channel of the second connection interface, and a third communication channel of the third connection interface are coupled to the controller. Wherein the power selection component, in respond to a control signal provided by the controller, selectively couples a first power bus of the first connection interface to a second power bus of the second connection interface or a third power bus of the third connection interface.

In an embodiment, the connection device further includes an active component coupled between the first transmission/reception channel and the second transmission/reception channel. wherein the active component is configured to perform an active signal processing to signal transferred via the first transmission/reception channel and the second transmission/reception channel.

In an embodiment, the active component includes a redriver and a retimer, and wherein the active signal processing includes a relay processing or retiming processing.

In an embodiment, the active component includes a channel multiplexer coupled to the first transmission/reception channel and configured to distinguish sub channels of the first transmission/reception channel by bandwidth.

In an embodiment, the connection device further includes a power conversion component coupled to the power selection component and configured to receive PD power provided by one of the first power bus, the second power bus and the third power bus, and convert the PD power to a board power.

The present invention provides a connection system. The connection system includes a connection device and a power supply. The connection device includes a first connection interface, a second connection interface, a third connection interface, a controller and a power selection component. Wherein a first transmission/reception channel of the first connection interface is, directly or indirectly, coupled to a second transmission/reception channel of the second connection interface. Wherein a first communication channel of the first connection interface, a second communication channel of the second connection interface, and a third communication channel of the third connection interface are coupled to the controller. Wherein the power selection component, in respond to a control signal provided by the controller, selectively couples a first power bus of the first connection interface to a second power bus of the second connection interface or a third power bus of the third connection interface. The power supply includes a fourth connection interface, a fifth connection interface and a PD power supply module. The fourth connection interface is configured to detachably coupled to the third connection interface. The fifth connection interface is configured to detachably coupled to a power supply interface. The PD power supply module is coupled between the fourth connection interface and the fifth connection interface, wherein the PD power supply module provides, in respond to coordinating with the controller via the PD charging protocol, a PD power through a fourth power bus of the fourth connection interface.

In an embodiment, in respond to the first connection interface connecting to a first device and the second connection interface connecting to a second device, the first device coordinates, via the controller, the PD charging protocol with at least one of the second device and the power supply.

In summary, the connection device and the connection system of the present invention includes the third connection interface that supports PD charging protocol with a power supply device connected to the third connection interface. When the power supply device connected to the second connection interface cannot provide a sufficient power required by the power demand device connected to the first connection interface, a PD charging protocol is established between the power supply device connected to the third connection interface and the power demand device. Therefore, the required power, provided by the power supply device, is transmitted to the power demand device via the first connection interface and the third connection interface. In this way, a stable and qualified power can be provided to the power demand device. In addition, the connection device provides additional functions such as connecting, extending, switching, or signal relay between the power demand device connected to the first connection interface and the power supply device connected to the second connection interface.

### BRIEF DESCRIPTION OF THE DRAWINGS

The accompanying drawings help describe various aspects of the present invention. To simplify and highlight the contents, conventional structures or elements may be drawn in a simple schematic way or omitted. For example, a number of elements may be singular or plural. These accompanying drawings are provided merely to explain these aspects and not to limit them.
FIGs. 1A and 1B are schematic diagrams of the transmission cables and the adapter arrangement in the prior art.
FIG. 2 is a block diagram of the connection device according to an embodiment of the present invention.
FIG. 3 is a block diagram of the connection device with an active component according to an embodiment of the present invention.
FIG. 4 is a function block diagram of an active component according to an embodiment of the present invention.
FIG. 5 is a block diagram of the connection device with a power conversion component according to an embodiment of the present invention.
FIG. 6 is a schematic diagram of the connection system according to an embodiment of the present invention.

### DETAILED DESCRIPTION

Any reference to elements using terms such as "first" and "second" herein generally does not limit the number or order of these elements. Conversely, these names are used herein as a convenient way to distinguish two or more elements or element instances. Therefore, it should be understood that the terms "first" and "second" in the requested item do not necessarily correspond to the same names in the written description. Furthermore, it should be understood that references to the first and second elements do not indicate that only two elements can be used or that the first element needs to precede the second element. Open terms such as "include", "comprise", "have", "contain", and the like used herein mean including but not limited to.

The term "coupled" is used herein to refer to direct or indirect electrical coupling between two structures. In indirect electrical coupling, one structure may be coupled with another through a passive element, such as a resistor, a capacitor, or an inductor.

In the present invention, terms such as "exemplary" or "for example" are used to represent "giving an example, instance, or description." Any implementation or aspect described herein as "exemplary" or "for example" is not necessarily to be construed as preferred or advantageous over other aspects of the present invention. The terms "about" and "approximately" as used herein concerning a specified value or characteristic are intended to represent within a value (for example, 10%) of the specified value or characteristic.

The term of "PD charging protocol" recited in the present invention refers to the protocol of USB Power Delivery (USB-PD), which refers to the power transmission technology defined by the USB Promoters Group. However, the term of "PD charging protocol" recited in the present invention can also refer to any suitable protocols related for power transmission and/or power supply.

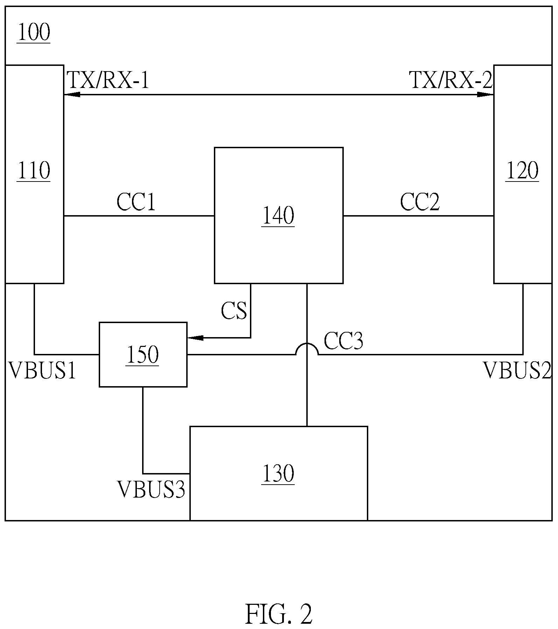

Referring to FIG. 2, FIG. 2 illustrates a connection device100. The connection device100 includes a first connection interface 110, a second connection interface 120, a third connection interface 130, a controller 140 and a power selection component 150. Wherein a first transmission/reception channel (TX/RX-1) of the first connection interface 110 is, directly or indirectly, coupled to a second transmission/reception channel (TX/RX-2) of the second connection interface 120. Wherein a first communication channel (CC1) of the first connection interface 110, a second communication channel (CC2) of the second connection interface 120, and a third communication channel (CC3) of the third connection interface 130 are coupled to the controller 140. Wherein the power selection component 150, in respond to a control signal (CS) provided by the controller 140, selectively couples a first power bus (VBUS1) of the first connection interface 110 to a second power bus (VBUS2) of the second connection interface 120 or a third power bus (VBUS3) of the third connection interface 130.

In the embodiment, the first connection interface 110, the second connection interface 120, or the third connection interface 130 are any connection interfaces suitable for the PD charging protocol. According to the current definition of the PD charging protocol announced by the USB-IF Association (e.g. the USB Promoters Group), USB Type-C is the standard interface commonly used. However, a person having ordinary skill in the art (PHOSITA) should understand that the first connection interface 110, the second connection interface 120, or the third connection interface 130 of the present invention are not limited to USB Type-C. If the specification and/or the standard of the PD charging protocol is updated or the technology of interface is changed, the present invention can still be applied to other suitable connection interfaces without exceeding spirits or goals of the present invention. In addition, the arrangement mechanism of the first connection interface 110, the second connection interface 120, or the third connection interface 130 may be any conventional arrangement mechanisms, such as a socket (i.e. female type), a plug (i.e. male type), a wired socket, or a plug. The present invention does not limit the arrangement mechanism of the first connection interface 110, the second connection interface 120, or the third connection interface 130.

In the embodiment, the controller 140 is a programmable component such as a Field-Programmable Gate Array (FPGA), an Application-Specific Integrated Circuit (ASIC), or a microprocessor. In an embodiment, the controller 140 is, preferably, an integrated circuit (IC) for controlling the PD charging protocol of USB Type-C. When the first connection interface 110, the second connection interface 120, and/or the third connection interface 130 are respectively connected to corresponding device(s) (for example, the first connection interface 110 is connected to a laptop, the second connection interface 120 is connected to a monitor, and the third connection interface 130 is connected to a power supply that able to coordinate the PD charging protocol), the controller 140 performs the PD charging protocol with the monitor or the power supply. Specifically, the controller 140 determines the power demand of the laptop connected to the first connection interface 110, the power supply capabilities of the monitor and/or the power supply, and a power supply path for the PD charging protocol through the first communication channel (CC1), the second communication channel (CC2), and the third communication channel (CC3). The controller 140 of the present invention selects the power supply path for the PD charging protocol to ensure that the second connection interface 120 or the third connection interface 130 can transmit a required power (i.e. PD power) to the first connection interface 110. In the embodiment, the first communication channel (CC1), the second communication channel (CC2), and the third communication channel (CC3) are Configuration Channel (CC) of a USB Type-C, but not limited to.

After the controller 140 coordinated the PD charging protocol with a second device connected to the second connection interface 120 or a third device connected to the third connection interface 130, the controller 140 provides a control signal (CS) to the power selection component 150. In responds to receive the control signal (CS)m the power selection component 150 selectively couples the first power bus (VBUS1) of the first connection interface 110 to the second power bus (VBUS2) of the second connection interface 120 or the third power bus (VBUS3) of the third connection interface 130. In the embodiment, the power selection component 150 is a selectable component, such as a transistor, a switch, or a multiplexer. For example, in a first case that a first device connected to the first connection interface 110 is a power demand device and the second device connected to the second connection interface 120 is able to provide sufficient power required by the first device, the PD charging protocol is established between the first device and the second device. In the first case, the controller 140 provides the control signal (CS) to the power selection component 150 to couple the first power bus (VBUS1) with the second power bus (VBUS2). Therefore, the second device connected to the second connection interface 120 is able to provide a PD power to the first device connected to the first connection interface 110. On the other hand, in a second case, if the second device connected to the second connection interface 120 is unable to provide the power required by the first device, the controller 140 establishes the PD charging protocol with the third device connected to the third connection interface 130 (preferably a power supply). In the second case, the controller 140 provides the control signal (CS) to couple the first power bus (VBUS1) to the third power bus (VBUS3). Therefore, the third device connected to the third connection interface 130 will provide the PD power to the first device connected to the first connection interface 110.

It should be noted that the present invention does not limit the type of the third device connected to the third connection interface 130. The third device connected to the third connection interface 130 can be any devices that supports PD charging protocol. The source for providing the PD power of the third device can be, for example, a monitor, a power supply, a computer, etc. The third connection interface 130 serves as an auxiliary power supply for the first device connected to the first connection interface 110 to replace the second device connected to second connection interface 120. In summary, when the second device connected to the second connection interface 120 cannot provide the power required by the first device connected to the first connection interface 110, the required power can be provided to the first connection interface 110 by the third device through the third connection interface 130. Accordingly, the first device is charged without inserting additional cables to other connection interfaces of the first device. The user of the first device is free from inconvenient situation such as annoying wiring, chaotic routing and/or an increment of the cost of wiring.

It should be noted that, although the first connection interface 110 is coupled to the power demand device as an example, the first connection interface 110 and the second connection interface 120 in the present invention may also be equivalent exchanged. For example, in an embodiment, the power selection component 150 is further configured to selectively couple the second power bus (VBUS2) to the third power bus (VBUS3) based on the control signal (CS). Therefore, the second connection interface 120 can also be connected to a power demand device to obtain the required power from the first connection interface 110 or the third connection interface 130. In other words, in the embodiment, the connection device is configured as non-directionality for providing/requiring power.

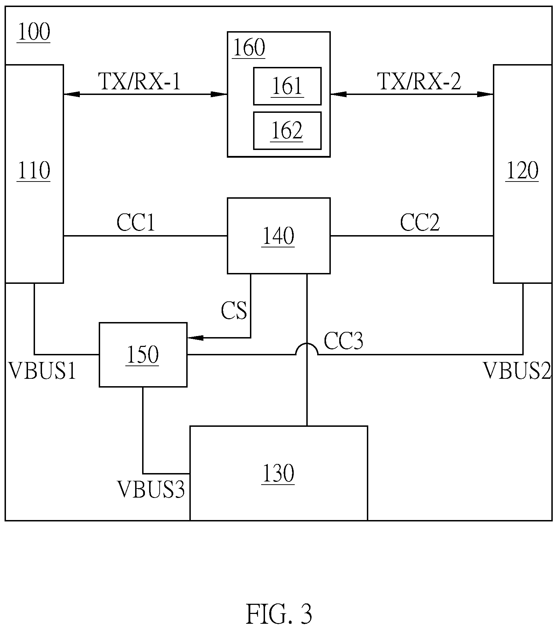

In an embodiment, the connection device 100 further includes an active component 160 coupled between the first transmission/reception channel (TX/RX-1) and the second transmission/reception channel (TX/RX-2). More specifically, referring to FIG. 3, the active component 160 is configured to perform active signal processing, such as a relay processing or a retiming processing, to signals transmitted through the first transmission/reception channel (TX/RX-1) and the second transmission/reception channel (TX/RX-2). The relay processing is modulations, such as equalization, preemphasis, and/or de-emphasis, for the signals to enhance, modulate, or reproduce the signals. The retiming processing is, for example, operations to detect data and/or clock of the signals by a clock and data recovery (CDR) circuits to reduce, for example but not limit to, the occurrence of jitter of output signal. In the embodiment, the active component 160 includes a redriver 161 and/or a retimer 162, but is not limited to. With the active component 160, the signal transmitted through the connection device 100 can be enhanced and compensated for the signal attenuation during transmission. The active component 160 also eliminates unfavorable situations such as jitter, clock skew, crosstalk, and electromagnetic interference happened over the transmission of the signals, but not limited to.

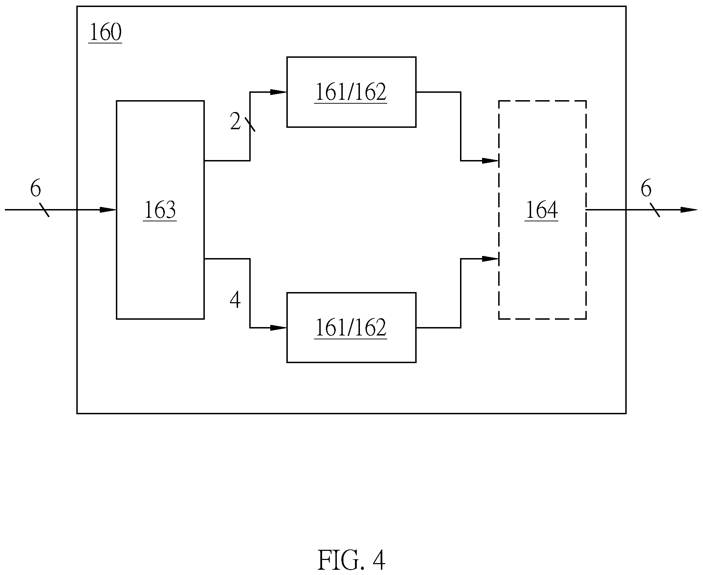

In an application example of the active component 160, referring to FIG. 4. The active component 160 further includes a channel multiplexer 163, which distinguishes sub channels of the first transmission/reception channel 110 or the second connection interface 120 by bandwidth. For example, the specification of the first connection interface 110 and the second connection interface 120 is USB Type-C, and a six to four or a six to two channel multiplexer is used to regulate the channels of USB Type-C as two sub channels (2 LANs) or four sub channels (4 LANs) for relay processing or retiming processing, respectively. In the embodiment, the channel multiplexer 163 is configured to distinguish the signals transmitted by the first connection interface 110 and the second connection interface 120 to process the signals separately according to the bandwidth. More specifically, due to the bandwidth of the 4 LANs is relatively larger, the 4 LANs can be used for transmitting images occupied large bandwidth or for simultaneously transmitting data and image. The 4 LANs may be distinguished by the channel multiplexer 163 for a specific relay processing for the image signal. In the other hands, due to the bandwidth of the 2 LANs is relatively small, the 2 LANs can be used for data transmission. The 2 LANs may be distinguished by the channel multiplexer 163 for a specific relay processing for the data signal. Through the channel multiplexer 163, more types or specifications of redrivers and/or retimers for the 2 LANs and /or the 4 LANs can be selected for the active component 160 instead of being limited by the specification for full channels. In addition, in an embodiment, a demultiplexer or integrator 164 can be set up to reassemble signals transmitted by the separated sub channels. However, the active component 160 of the present invention is not limited to by the channel multiplexer 163 and/or the demultiplexer or integrator 164. The active components 160 can be selected for the types of signals transmitted by the first connection interface 110 and the second connection interface 120.

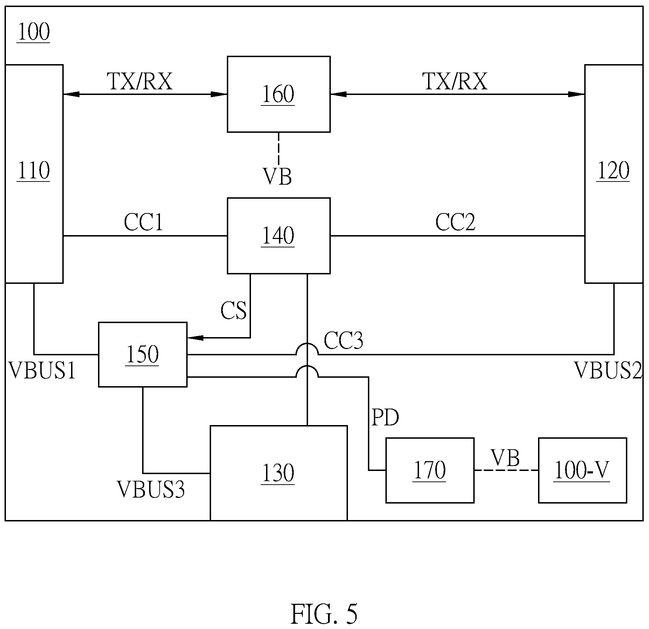

In an embodiment, referring to FIG. 5, the connection device 100 further includes a power conversion component 170 coupled to the power selection component 150. The power conversion component 170 receives, through the power selection component 150, the PD power (PD) from the first power bus (VBUS1), the second power bus (VBUS2), or the third power bus (VBUS3). The power conversion component 170 further converts the PD power (PD) into a board power (VB). For example, if the PD power supply is a power supply providing a high power and/or a high voltage that the components on the connection device 100 can not use, the PD power supply is unable to directly supply required power to the components on the circuit board of the connection device 100 (such as the active component 160, LED lights, or power supply component). In the embodiment, the power conversion component 170 converts the PD power supply (PD) to the board power supply (VB) that fitting the power specification of the components on the circuit board of the connection device 100. Hence, the board power supply (VB) can be provided to the power layer (100-V) of the circuit board of the connection device 100 to supply the required power to the components on the circuit board of the connection device 100. In the embodiment, the connection device 100 is configured to directly use the PD power from the first connection interface 110, the second connection interface 120, or the third connection interface 130 without other external power supplies for the components on the circuit board of the connection device 100. The power supply (VB) for the board is, preferably, 5V, but not limited to. It should be noted that the embodiment is not intended to limit the goal or effect of the power conversion component of the present invention. In addition, if the components on the circuit board of the connection device 100 can directly use the PD power, the power conversion component 170 may be omitted.

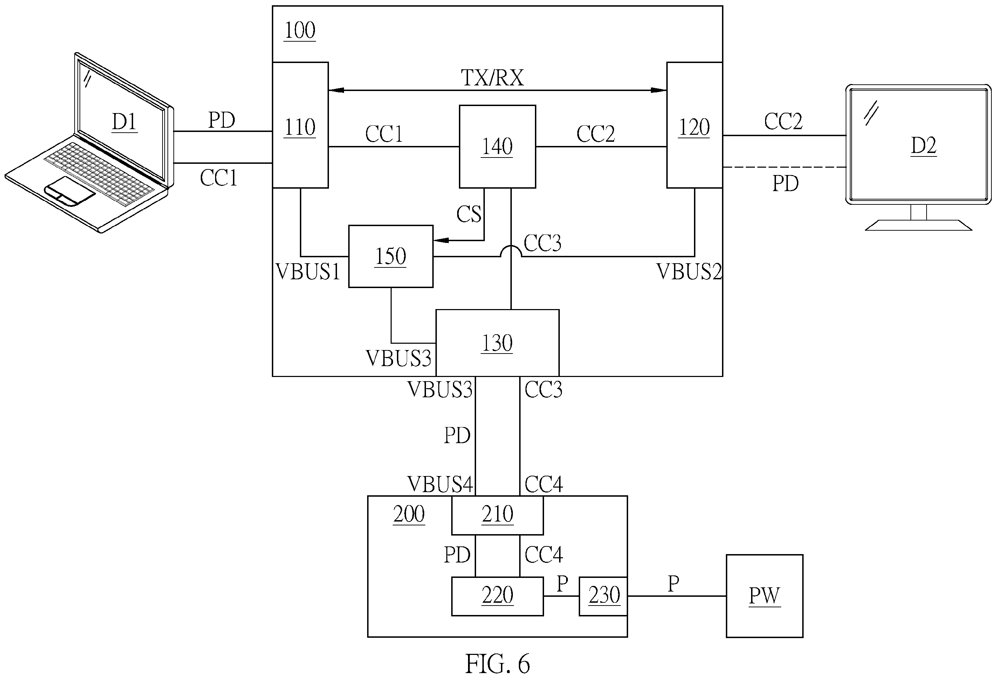

In an embodiment of the present invention, the present invention provides a connection system. Referring to FIG. 6, the connection system 10 includes a connection device 100 and a power supply 200. The power supply 200 includes a fourth connection interface 210, a fifth connection interface 230, and a PD power supply module 220. The fourth connection interface 210 is configured to configured to detachably coupled to the third connection interface 130. The fifth connection interface 230 is configured to detachably coupled to a power supply interface (PW). The PD power supply module 220 is coupled between the fourth connection interface 210. Wherein the PD power supply module 220 provides, in respond to coordinating with the controller 140 via the PD charging protocol, the PD power (PD) through a fourth power bus (VBUS4) of the fourth connection interface 210.

More specifically, the specification of the fourth connection interface 210 is corresponding to the third connection interface 130. For example, if the third connection interface 130 is a socket of USB Type-C, the fourth connection interface 210 is a corresponding plug of USB Type-C. The fourth power bus (VBUS4) of the fourth connection interface 210 is configured to be coupled to the third power bus (VBUS3) of the third connection interface 130, and the fourth communication channel (CC4) of the fourth connection interface 210 is configured to be coupled to the third communication channel (CC3) of the third connection interface 130. The power supply interface (PW), such as a wall-mounted socket, utility power socket, or any power output interface capable of supplying the PD power. The fifth connection interface 230 is the interface corresponding to the power supply interface (PW). For example, if the power supply interface (PW) is a socket, then the fifth connection interface 230 is a plug corresponding to the type of the power supply interface (PW). After receiving the power (P) from the power supply interface (PW), the PD power supply module 220 converts or modulate the power (e.g. AC 110V or DC 5-20V) provided by the power supply interface (PW) to the PD power and provides the PD power to the fourth power bus (VBUS4) of the fourth connection interface 210.

The connection system 10 provides a stable PD power to the connection device 100 through the power supply 200. For example, the first connection interface 110 is connected to a first device (D1) and the second connection interface 120 is connected to a second device (D2), the first device (D1) coordinates the PD charging protocol with at least one of the second device (D2) and the power supply 200 through the controller 140. Therefore, the first device (D1) receives the power required by the first device (D1) from at least one of the second device (D2) and the power supply 200. It should be noted that although the first device (D1) in FIG. 6 is a laptop and the second device (D2) is a screen, the connection system 10 is not limited to the device and/or the power transmission direction shown in FIG. 6.

In summary, the connection device 100 and the connection system 10 of the present invention have the third connection interface 130 that supports the PD charging protocol and a corresponding power supply 200. When the power supply device connected to the second connection interface 120 cannot provide the power required by the power demand device connected to the first connection interface 110, the PD charging protocol is established between the power supply 200 and the power demand device Therefore, required power is transmitted to the first connection interface 110 through the third connection interface 130 and provided to the power demand device. In this way, a stable power supply can be provided to the power demand device. In addition, the connection device 100 also can be configured to provide functions such as connecting, extending, switching, or signal relay between the first device (D1) and the second device (D2).

The previous description of the present invention is provided to enable a person of ordinary skill in the art to make or implement the present invention. Various modifications to the present invention will be apparent to a person skilled in the art, and the general principles defined herein can be applied to other variations without departing from the spirit or scope of the present invention. Therefore, the present invention is not intended to be limited to the examples described herein but is in accord with the widest scope consistent with the principles and novel features of the invention herein.

## Claims

1. A connection device (100), comprising:
a first connection interface (110);
a second connection interface (120), wherein a first transmission/reception channel (TX/RX-1) of the first connection interface (110) is, directly or indirectly, coupled to a second transmission/reception channel (TX/RX-2) of the second connection interface (120);
a third connection interface (130);
a controller (140) at least configured to perform a PD charging protocol, wherein a first communication channel (CC1) of the first connection interface (110), a second communication channel (CC2) of the second connection interface (120), and a third communication channel (CC3) of the third connection interface (130) are coupled to the controller (140); and
a power selection component (150), wherein the power selection component (150), in respond to a control signal (CS) provided by the controller (140), selectively couples a first power bus (VBUS1) of the first connection interface (110) to a second power bus (VBUS2) of the second connection interface (120) or a third power bus (VBUS3) of the third connection interface (130).

2. The connection device (100) of claim 1, further comprising:
an active component (160) coupled between the first transmission/reception channel (TX/RX-1) and the second transmission/reception channel (TX/RX-2), wherein the active component (160) is configured to perform an active signal processing to signal transferred via the first transmission/reception channel (TX/RX-1) and the second transmission/reception channel (TX/RX-2).

3. The connection device (100) of claim 2, wherein the active component (160) includes a redriver (161) and a retimer (162), and wherein the active signal processing includes a relay processing or retiming processing.

4. The connection device (100) of claim 2, wherein the active component (160) includes a channel multiplexer (163) coupled to the first transmission/reception channel (TX/RX-1) and configured to distinguish sub channels of the first transmission/reception channel (TX/RX-1) by bandwidth.

5. The connection device (100) of claim 1, further comprising:
a power conversion component (170) coupled to the power selection component (150) and configured to receive PD power (PD) provided by one of the first power bus (VBUS1), the second power bus (VBUS2) and the third power bus (VBUS3), and convert the PD power (PD) to a board power (VB).

6. A connection system (10), comprising:
a connection device (100), comprising:
a first connection interface (110);
a second connection interface (120), wherein a first transmission/reception channel (TX/RX-1) of the first connection interface (110) is, directly or indirectly, coupled to a second transmission/reception channel (TX/RX-2) of the second connection interface (120);
a third connection interface (130);
a controller (140) at least configured to perform a PD charging protocol, wherein a first communication channel (CC1) of the first connection interface (110), a second communication channel (CC2) of the second connection interface (120), and a third communication channel (CC3) of the third connection interface (130) are coupled to the controller (140); and
a power selection component (150), wherein the power selection component (150), in respond to a control signal (CS) provided by the controller (140), selectively couples a first power bus (VBUS1) of the first connection interface (110) to a second power bus (VBUS2) of the second connection interface (120) or a third power bus (VBUS3) of the third connection interface (130); and
a power supply (200), comprising:
a fourth connection interface (210) configured to detachably coupled to the third connection interface (130);
a fifth connection interface (230) configured to detachably coupled to a power supply (200) interface; and
a PD power supply module (220) coupled between the fourth connection interface (210) and the fifth connection interface (230), wherein the PD power supply module (220) provides, in respond to coordinating with the controller (140) via the PD charging protocol, a PD power (PD) through a fourth power bus of the fourth connection interface (210).

7. The connection system (10) of claim 6, wherein the connection device (100) further comprises:
an active component (160) coupled between the first transmission/reception channel (TX/RX-1) and the second transmission/reception channel (TX/RX-2), wherein the active component (160) is configured to perform an active signal processing to signal transferred via the first transmission/reception channel (TX/RX-1) and the second transmission/reception channel (TX/RX-2).

8. The connection system (10) of claim 7, wherein the active component (160) includes a redriver (161) and a retimer (162), and wherein the active signal processing includes a relay processing or retiming processing.

9. The connection system (10) of claim 7, wherein the active component (160) includes a channel multiplexer (163) coupled to the first transmission/reception channel (TX/RX-1) and configured to distinguish sub channels of the first transmission/reception channel (TX/RX-1) by bandwidth.

10. The connection system (10) of claim 6, wherein the connection device (100) further comprises:
a power conversion component (170) coupled to the power selection component (150) and configured to receive PD power (PD) provided by one of the first power bus (VBUS1), the second power bus (VBUS2) and the third power bus (VBUS3), and convert the PD power (PD) to a board power (VB).

11. The connection system (10) of claim 6, in respond to the first connection interface (110) connecting to a first device (D1) and the second connection interface (120) connecting to a second device (D2), the first device (D1) coordinates, via the controller (140), the PD charging protocol with at least one of the second device (D2) and the power supply (200).
